# EUROPÄISCHE PATENTSCHRIFT

(11) **EP 0 647 693 B1**
(45) Veröffentlichungstag und Bekanntmachung des Hinweises auf die Patenterteilung: **08.09.1999**
(21) Anmeldenummer: 94115418.9
(22) Anmeldetag: 30.09.1994
(51) Int. Cl.: C09J 11/00, C08J 11/00, C08L 97/02, C08H 5/04, C09J 197/00, D21C 5/00

(54) **Streckmittel für Holzwerkstoff-Bindemittel und Verfahren zu seiner Herstellung**
Extenders for binders of wood-based materials and process for their preparation
Agent extendeur de liants pour matériaux en bois et procédé pour leur préparation

(30) Priorität: 08.10.1993 DE 4334422
(43) Veröffentlichungstag der Anmeldung: 12.04.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: Dix, Brigitte Dr., D-38102 Braunschweig (DE); Roffael, Edmone, Prof. Dr. Ing., D-38104 Braunschweig (DE)

(56) Entgegenhaltungen:
- EP-A- 0 056 935
- WO-A-94/28236
- AU-B- 7 947 033
- CHEMICAL ABSTRACTS, vol. 106, no. 6, 9. Februar 1987, Columbus, Ohio, US; abstract no. 35006,
- CHEMICAL ABSTRACTS, vol. 113, no. 14, 1. Oktober 1990, Columbus, Ohio, US; abstract no. 116722,
- CHEMICAL ABSTRACTS, vol. 108, no. 20, 16. Mai 1988, Columbus, Ohio, US; abstract no. 169464,

## Beschreibung

Die Erfindung betrifft eine Ablauge aus bereits verarbeiteten bindemittelhaltigen Span- und/oder Faserplatten.

Für die Herstellung von Holzwerkstoffen, insbesondere Span- und Faserplatten, werden in der Regel Bindemittel wie Harnstofformaldehydharze (UF-Harze), Phenolformaldehydharze (PF-Harze) und solche auf der Basis von polymeren Diisocyanat (PMDI) eingesetzt. Diese Bindemittel sind teuer und gehen bis zu 30% in die Endkosten der Spanplattenherstellung ein. Es ist wichtig, einerseits Bindemittel einzusetzen, die den herzustellenden Span- und Faserplatten eine geforderte Festigkeit verleihen, andererseits deren Einsatz so niedrig wie möglich zu halten. Daher werden oft die eingesetzten Bindemittel mit anderen, preisgünstigeren Stoffen gestreckt. Als Streckmittel sind bekannt Sulfitablaugen (Roffael, E., Dix, B. 1990: Lignin and ligninsulfonate in non-conventional bonding systems - an overview. 1st European Workshop on Lignocellulosics and Pulp (EWLP), 18.- 20.9.1990, Hamburg) Kohlenhydrate (Stofko, J. 1978: Bonding of solid lignocellulosic material. USP 4,107,379, Stofko, J. 1980: Bonding of solid lignocellulosic material. USP 4,183,997) und Kochsalzlösung (Roffael, E. Schneider, A. 1983: Untersuchungen über den Einfluß von Kochsalz als Bindemittelzusatz auf Eigenschaften von Spanplatten. Holz-Zentralblatt 109,1414-1415).

Aufgabe der vorliegenden Erfindung ist es, ein preiswertes und gebrauchsvorteilhaftes Streckmittel für Holzwerkstoff-Bindemittel und Verfahren zu dessen Herstellung anzugeben. Das Verfahren zur Herstellung eines solchen Streckmittels soll kostensparend und einfach sein.

Diese Aufgabe ist durch die im Hauptanspruch angegebene Erfindung gelöst. Das Verfahren zur Herstellung des Streckmittels gibt Anspruch 6 an.

Es wurde überraschend gefunden, daß aus bereits verarbeiteten (alten) Span- und Faserplatten (z.B. aus Altmöbel), welche bereits Bindemittel wie UF-Harze, PF-Harze, Tannine oder Diisocyanate enthalten, Streckmittel für Bindemittel hergestellt werden können. Werden die bereits verarbeiteten Span- und Faserplatten chemisch-thermisch aufgeschlossen derart, daß das Holzgefüge aufgelöst wird, so fällt bei diesem Aufschlußverfahren Flüssigkeit an. Das Holzgefüge wird dabei völlig oder teilweise in seine chemischen Hauptbestandteile getrennt (Lignin, Hemicellulose, Cellulose) . Diese dabei anfallende Flüssigkeit, die im Schrifttum als "Ablauge" bezeichnet wird, enthält in diesem Fall nicht nur die Abbauprodukte des Holzes, sondern darüber hinaus die des verwendeten Bindemittels. Der Begriff "Ablauge" wird hier in Anlehnung an die übliche Terminologie in der Zellstofftechnologie verwendet. Eine solche Ablauge kann nach Eindicken direkt als Bindemittelersatz verwendet werden. Die Zugabe von derartigen Streckmitteln richtet sich nach der geforderten Festigkeit der Fertigprodukte und nach der eigentlichen Zusammensetzung des Bindemittels. Normalerweise führt eine Zugabe von 20% des Streckmittels zu sehr guten Ergebnissen, d.h. die Festigkeit einer mit einem derartigen Bindemittel hergestellten Faser- oder Spanplatte entspricht der Festigkeit einer Spanplatte, die mit reinem Bindemittel (ohne Zugabe von Streckmitteln) hergestellt wurde. In manchen Fällen ist eine Zugabe von Streckmittel zu Bindemittel im Verhältnis 50:50 möglich.

Das Verfahren zur Herstellung der erfindungsgemäßen Ablauge wird so durchgeführt, daß zunächst bereits verarbeitete Span- und Faserplatten zu Hackschnitzel zerkleinert und die Hackschnitzel anschließend chemisch-thermisch behandelt werden, so daß das Holzgefüge aufgelöst wird. Nach diesem Verfahren können mit Aminoplasten, mit Bindemittel auf Phenoplastbasis und mit Bindemittel auf Basis von polymerem Diphenylmethandiisocyanat (PMDI) gebundene Span- und Faserplatten verarbeitet werden. Als Aufschlußverfahren können z.B. das Sulfit- und das Sulfatverfahren, die für die Herstellung von Zellstoffen aus dem Holz eingesetzt werden, verwendet werden. Insofern wird bei dem erfindungsgemäßen Verfahren die Herstellung von Streckmitteln aus alten Span- und Faserplatten in vorteilhafter Weise mit der Herstellung von Zellstoffen oder zellstoffartigen Produkten kombiniert. Das erfindungsgemäße Verfahren zur Herstellung von Streckmittel für Bindemittel hat noch den weiteren Vorteil, daß sich danach alte Holzspan- und Faserplatten nutzbringend verwerten lassen, die ansonsten gegebenenfalls umweltbelastend deponiert oder thermisch entsorgt werden müßten. Bei der thermischen Entsorgung von Spanplatten besteht immer die Gefahr der vermehrten Dioxinbildung, auch kommt es zur Bildung von Salzsäure, wenn Ammoniumchlorid als Härtungsbeschleuniger eingesetzt wurde. Selbstverständlich läßt sich das Verfahren analog auf die Reststoffe der Span- und Faserplatten anwenden, die bei der Verarbeitung (z.B. Postforming) anfallen. Hier kann ggf. auf die Vorzerkleinerung verzichtet werden.

Die erfindungsgemäße Ablauge kann als Streckmittel für Holzwerkstoff-Bindemittel, insbesondere für Harnstofformaldehydharz, Phenolformaldehydharz, Tanninformaldehydharz, Stärke oder Pektin, Stärkeacetat oder Stärkepropionat und Protein verwendet werden.

In der Tabelle 1 sind die Eigenschaften der aus einer UF-gebundenen Span- und Faserplatte hergestellten Zellstoffe sowie die hierfür verwendeten Aufschlußbedingungen angegeben.

In der Tabelle 2 sind die Gelierzeiten aus Abmischungen von "Ablaugen" der Span- und Faserplatte mit konventionellen UF-Harzen aufgezeigt.

Aus der Tabelle 1 ist ersichtlich, daß nach dem Sulfatverfahren Zellstoffe mit annehmbaren Festigkeitseigenschaften hergestellt werden können. Die Wahl des geeigneten Verfahrens richtet sich nach der Zusammensetzung des Holzes in der Span- bzw. Faserplatte sowie nach dem darin enthaltenden Bindemittel. Auch die weitere Nutzung der nach dem Aufschluß hergestellten Lignocellulose kann die Aufschlußbedingungen mitbestimmen. Sollte der herzustellende Zellstoff für die Papierherstellung eingesetzt werden, so können weitaus schärfere Bedingungen gewählt werden als bei dessen Einsatz für die Faserplattenerzeugung. Die Ausbeute beim Aufschluß der Spanplatten nach dem Sulfatverfahren liegt im üblichen Bereich, wie bei dem Aufschluß von Holz selbst. Auch der Weißgrad liegt in dem für Sulfatzellstoffe üblichen Bereich.

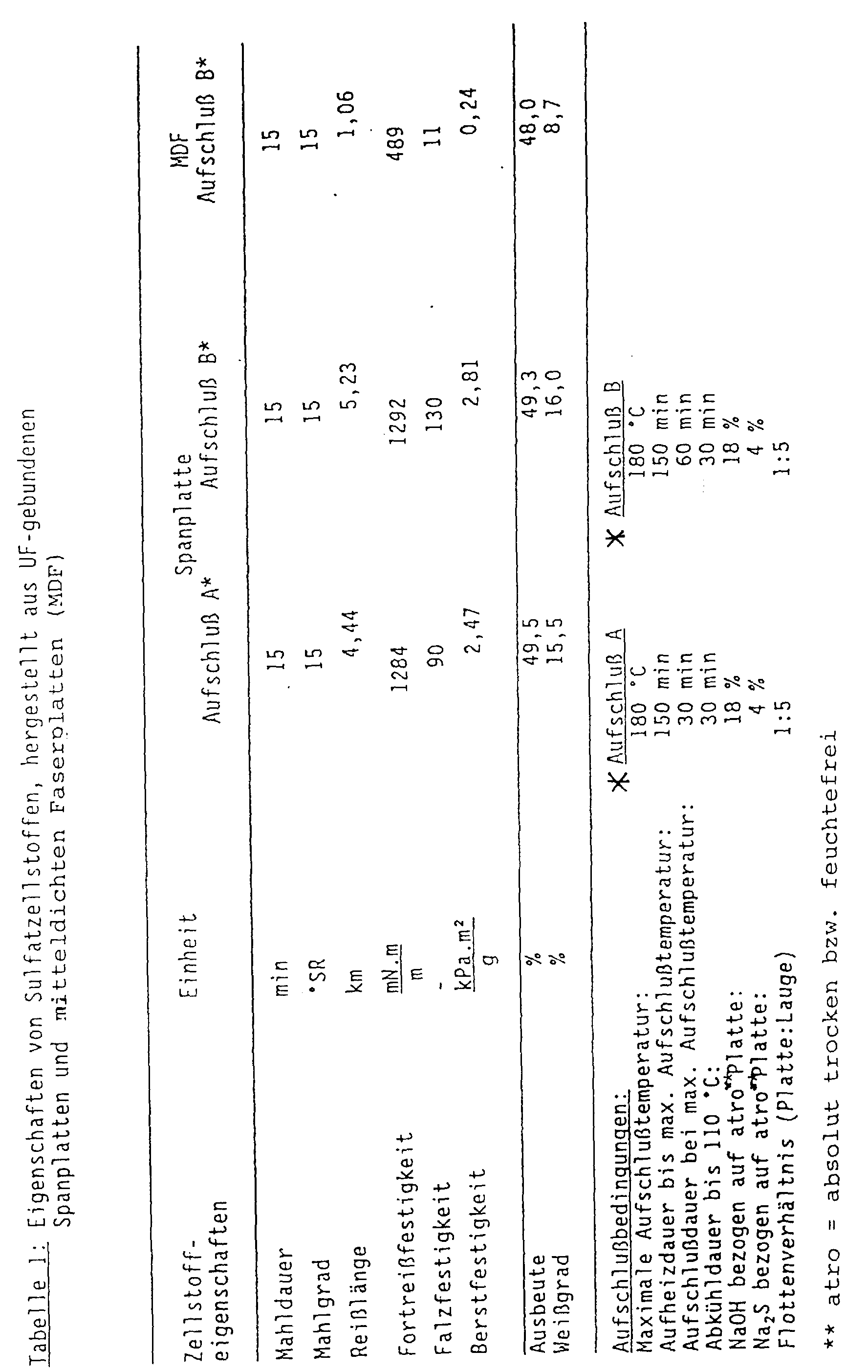

**Tabelle 2:**

| Gelierzeiten (bei 90 °C) von Abmischungen aus UF-Harz und "Ablauge" (Sulfataufschluß der Spanplatte und MDF) | | | |
|---|---|---|---|
| Leimflotte: UF-Harz 1 (65%ig, Molverhältnis F:U = 1,3:1) bzw. UF-Harz 2 (65%ig, Molverhältnis F:U = 1,3:1) Streckmittel (5...10 % Ersatz des UF-Festharzes) 15%ige Ammoniumchlorid-Lösung (10 % bezogen auf 65%igen Rohleim) | | | |

| UF-Harz | Streckmittel | Streckmittelanteil (%) | Gelierzeit (s) |
|---|---|---|---|
| 1 | - | - | 118 |
| 2 | - | - | 121 |
| | | | |
| 1 | "Ablauge" Mitteldichte | 5 | 198 |
| | Faserplatte | 10 | 451 |
| | | | |
| 2 | "Ablauge" Mitteldichte | 5 | 180 |
| | Faserplatte | 10 | 420 |
| | | | |
| 1 | "Ablauge" Spanplatte | 5 | 187 |
| | | 10 | 315 |
| | | | |
| 2 | "Ablauge" Spanplatte | 5 | 170 |
| | | 10 | n.b. |
| | | | |
| 1 | Organocell-Lignin | 5 | 120 |
| | | 10 | 143 |
| | | | |
| 2 | Organocell-Lignin | 5 | 128 |
| | | 10 | 129 |
| | | | |
| 1 | Ligninsulfonat | 10 | 163 |
| | | | |
| 2 | Ligninsulfonat | 10 | 142 |
| n.b. = nicht bestimmt | | | |

## Patentansprüche

1. Ablauge, die erhalten wird aus dem chemisch-thermischen Aufschluß von bereits verarbeiteten bindemittelhaltigen Span- und Faserplatten mit anschließendem Abtrennen von Zellstoff, die als Streckmittel für Holzwerkstoff-Bindemittel verwendbar ist.

2. Ablauge nach Anspruch 1, **dadurch gekennzeichnet,** daß die Ablauge eingedickt wird und ihr ein Mittel zur pH-Werteinstellung zugegeben ist..

3. Ablauge nach Anspruch 1 oder 2, **dadurch gekennzeichnet**, daß die verwendeten Span- und Faserplatten mit Aminoplasten gebunden sind..

4. Ablauge nach Anspruch 1 oder 2, **dadurch gekennzeichnet**, daß die verwendeten Span- und Faserplatten ein Bindemittel auf Phenoplastbasis enthalten.

5. Ablauge nach Anspruch 1 oder 2, **dadurch gekennzeichnet**, daß die verwendeten Span- und Faserplatten ein Bindemittel auf Basis von polymerem Diisocyanat (PMDI) enthalten.

6. Verfahren zur Herstellung der Ablauge nach einem der vorangegangenen Ansprüche, **dadurch gekennzeichnet**, daß bereits verarbeitete Holzspan- und Holzfaserplatten zunächst zu Hackschnitzeln zerkleinert werden und anschließend nach einem an sich bekannten chemisch-thermischen Verfahren unter Auflösung des Holzgefüges aufgeschlossen werden, wobei die nach Abtrennung der Zellstoffe anfallende Flüssigkeit als Ablauge isoliert wird.

7. Verfahren nach Anspruch 6, **dadurch gekennzeichnet**, daß das Aufschlußverfahren für die bereits verarbeiteten Holzspan- und Holzfaserplatten das Sulfatverfahren ist.

8. Verfahren nach Anspruch 6, **dadurch gekennzeichnet**, daß das Aufschlußverfahren für die bereits verarbeiteten Holzspan- und Holzfaserplatten das Sulfitverfahren ist.

9. Verfahren nach Anspruch 6, **dadurch gekennzeichnet**, daß das Aufschlußverfahren für die bereits verarbeiteten Holzspan- und Holzfaserplatten das Organosolv-Verfahren ist.

10. Verwendung der bei chemisch-thermischen Aufschluß von bereits verarbeiteten Span- und Faserplatten anfallenden Ablauge nach einem der Ansprüche 1 bis 5 als Streckmittel für Holzwerkstoff-Bindemittel.

11. Verwendung nach Anspruch 10, **dadurch gekennzeichnet**, daß die Ablauge als Streckmittel für ein Harnstofformaldehydharz verwendet wird.

12. Verwendung nach Anspruch 10, **dadurch gekennzeichnet**, daß die Ablauge als Streckmittel für ein Phenolformaldehydharz verwendet wird.

13. Verwendung nach Anspruch 10, **dadurch gekennzeichnet**, daß die Ablauge als Streckmittel für ein Tanninformaldehydharz verwendet wird.

14. Verwendung nach Anspruch 10, **dadurch gekennzeichnet**, daß die Ablauge als Streckmittel für ein Polysaccharid wie Stärke oder Pektin verwendet wird.

15. Verwendung nach Anspruch 10, **dadurch gekennzeichnet**, daß die Ablauge als Streckmittel für ein Polysaccharidderivat wie Stärkeacetat oder Stärkepropionat verwendet wird.

16. Verwendung nach Anspruch 10, **dadurch gekennzeichnet**, daß die Ablauge als Streckmittel für ein Protein verwendet wird.

## Claims

1. Waste liquor which is obtained from the chemical-thermal disintegration of already processed binder-containing chipboards and fibreboards with subsequent separation of cellulose which waste liquor can be used as extenders for binders of wood-based materials.

2. Waste liquor according to claim 1, **characterised in that** the waste liquor is concentrated and to it is added a means for adjusting the pH value.

3. Waste liquor according to claim 1 or 2, **characterised in that** the used chipboards and fibreboards are bonded with aminoplastic resins.

4. Waste liquor according to claim 1 or 2, **characterised in that** the used chipboards and fibreboards contain a binder with a base of phenolic resins.

5. Waste liquor according to claim 1 or 2, **characterised in that** the used chipboards and fibreboards contain a binder with a base of polymer diisocyanate (PMDI).

6. Method for producing the waste liquor according to one of the preceding claims, **characterised in that** already processed woodchip- and woodfibre-boards are chopped up firstly into wood chips and subsequently broken down by disintegration of the woody structure according to a chemical-thermal method known in itself, the liquid occurring after separation of the cellulose materials being separated as waste liquor.

7. Method according to claim 6, **characterised in that** the disintegration procedure for the already processed woodchip- and woodfibre-boards is the sulphate procedure.

8. Method according to claim 6, **characterised in that** the disintegration procedure for the already processed woodchip- and woodfibre-boards is the sulphite procedure.

9. Method according to claim 6, **characterised in that** the disintegration procedure for the already processed woodchip- and woodfibre-boards is the organosolvprocedure.

10. Use of the waste liquor occurring during the chemical-thermal disintegration of already processed chipboards and fibreboards according to one of the claims 1 to 5 as an extender for binders of wood-based materials.

11. Use according to claim 10, **characterised in that** the waste liquor is used as an extender for a urea formaldehyde resin.

12. Use according to claim 10, **characterised in that** the waste liquor is used as an extender for a phenol formaldehyde resin.

13. Use according to claim 10, **characterised in that** the waste liquor is used as an extender for a tannin formaldehyde resin.

14. Use according to claim 10, **characterised in that** the waste liquor is used as an extender for a polysaccharide such as starch or pectin.

15. Use according to claim 10, **characterised in that** the waste liquor is used as an extender for a polysaccharide derivative such as starch acetate or starch propionate.

16. Use according to claim 10, **characterised in that** the waste liquor is used as an extender for a protein.

## Revendications

1. Lessive résiduaire qui est obtenue à partir de la désintégration chimico-thermique de plaques de particules et de fibres, contenant des agents liants déjà façonnées, avec séparation consécutive de cellulose qui est utilisable comme agent extenseur pour agent liant de matériau en bois.

2. Lessive résiduaire selon la revendication 1,
caractérisée en ce que
la lessive résiduaire est épaissie et qu'un agent pour l'ajustement de la valeur du pH lui est ajouté.

3. Lessive résiduaire selon la revendication 1 ou la revendication 2,
caractérisée en ce que
les plaques de particules et de fibres utilisées sont assemblées avec des aminoplastes.

4. Lessive résiduaire selon la revendication 1 ou la revendication 2,
caractérisée en ce que
les plaques de particules et de fibres renferment un agent liant à base de phénoplastes.

5. Lessive résiduaire selon la revendication 1 ou la revendication 2,
caractérisée en ce que
les plaques de particules et de fibres utilisées renferment un agent liant à base de diisocyanate polymère (PMDI).

6. Procédé de fabrication des lessives résiduaires selon l'une des revendications précédentes,
caractérisé en ce que
les plaques de particules de bois et de fibres de bois déjà façonnées sont broyées en premier lieu en rognures hachées et ensuite selon un procédé chimico-thermique connu en soi, sont désintégrées en mettant en solution la texture du bois, dans lequel le fluide qui se produit après séparation de la cellulose, est isolé en tant que lessive résiduaire.

7. Procédé selon la revendication 6,
caractérisé en ce que
le procédé de désintégration pour les plaques de bois et de fibres de bois déjà façonnées est le procédé au sulfate.

8. Procédé selon la revendication 6,
caractérisé en ce que
le procédé de désintégration pour les plaques de particules de bois et fibres de bois, déjà façonnées est le procédé au sulfite.

9. Procédé selon la revendication 6,
caractérisé en ce que
le procédé de désintégration pour les plaques de particules de bois et de fibres de bois déjà façonnées est le procédé organosolvant.

10. Utilisation des lessives résiduelles qui se produisent au cours de la désintégration chimico-thermique des plaques de particules et de fibres déjà façonnées selon l'une des revendications 1 à 5, en tant qu'agent extenseur pour agent liant de matériaux en bois.

11. Utilisation selon la revendication 10,
caractérisée en ce qu'
on utilise les lessives résiduaires comme agent extenseur pour une résine urée/formaldéhyde.

12. Utilisation selon la revendication 10,
caractérisée en ce qu'
on utilise la lessive résiduaire comme agent extenseur pour une résine phénol/formaldéhyde.

13. Utilisation selon la revendication 10,
caractérisée en ce qu'
on utilise la lessive résiduaire comme agent extenseur pour une résine tannino/formaldéhyde.

14. Utilisation selon la revendication 10,
caractérisée en ce qu'
on utilise la lessive résiduaire comme agent extenseur pour un polysaccharide comme un amidon ou une pectine.

15. Utilisation selon la revendication 10,
caractérisée en ce qu'
on utilise la lessive résiduaire comme agent extenseur pour un dérivé de polysaccharide comme l'acétate d'amidon ou le propionate d'amidon.

16. Utilisation selon la revendication 10,
caractérisée en ce qu'
on utilise la lessive résiduaire comme agent extenseur pour une protéine.
